# FASCICULE DE BREVET EUROPEEN

(11) **EP 0 614 604 B1**
(45) Date de publication et mention de la délivrance du brevet: **04.06.1997**
(21) Numéro de dépôt: 94440016.7
(22) Date de dépôt: 11.03.1994
(51) Int. Cl.: A01D 78/10

(54) **Machine de fenaison**
Heuwerbungsmaschine
Hay-making machine

(30) Priorité: 12.03.1993 FR 9303053
(43) Date de publication de la demande: 14.09.1994
(73) Titulaire: KUHN S.A., F-67700 Saverne (FR)
(72) Inventeur: Aron, Jérôme, F-67330 Dossenheim sur Zinsel (FR)
(74) Mandataire: Andres, Jean-Claude

(56) Documents cités:
- EP-A- 0 332 835
- EP-A- 0 415 301
- EP-A- 0 508 200
- DE-A- 2 833 814
- DE-A- 4 003 203
- DE-A- 4 033 526
- DE-U- 9 004 189
- US-A- 2 620 203

## Description

La présente invention se rapporte à une machine de fenaison comportant notamment une structure porteuse pouvant être reliée à un tracteur, laquelle structure porte au moins un rotor tournant autour d'un axe sensiblement vertical qui est muni, à son extrémité dirigée vers le bas, d'une ou plusieurs paires de roues, chaque paire étant fixée sur un balancier pouvant tourner d'une manière limitée autour d'un axe sensiblement horizontal. Une telle machine est connue du document DE-U-90 04 189.

Sur une machine de ce genre, le balancier permet de réduire l'ampleur des déplacements transmis au rotor lorsque les roues passent sur des dénivellations. Par conséquent, ledit rotor est plus stable, même à grande vitesse.

Toutefois, dans les virages les roues ripent sur le sol. Cela provient du fait qu'elles sont montées sur des axes fixes par rapport à leur balancier et qu'elles sont décalées l'une par rapport à l'autre, vues dans la direction d'avancement. Pour remédier à cela, il a été proposé de rendre une ou les deux roues d'une même paire pivotantes par rapport à leur balancier. Dans ce cas, le balancier doit se situer au-dessus de la ou des roues afin qu'elles aient la place pour tourner autour d'un axe vertical. Or, étant donné que la hauteur disponible sous chaque rotor est limitée par le moyeu et/ou les bras porte-outils de ce rotor, il est uniquement possible d'utiliser des roues pivotantes ayant un petit diamètre. De telles roues roulent moins bien sur les terrains denivellés et ne conviennent pas pour équiper des machines de grandes dimensions. De plus, pour rendre ces roues pivotantes, il est nécessaire de monter chacune sur un bras qui doit être articulé sur le balancier. Une telle réalisation est relativement compliquée et coûteuse.

La présente invention a pour but de proposer une machine qui ne présente pas les inconvénients précités. Sur cette machine toutes les roues doivent pouvoir tourner dans les virages sans riper sur le sol et ce grâce à un montage simple.

A cet effet, une caractéristique essentielle de l'invention consiste en ce que chaque balancier est en sus articulé par rapport à l'axe de rotation du rotor correspondant au moyen d'un axe sensiblement vertical qui se situe entre deux plans passant respectivement par l'axe de pivotement sensiblement horizontal dudit balancier et l'axe de la roue la plus en avant. Dans ce cas, les roues pivotent avec le balancier dans les virages. Elles s'orientent parfaitement suivant la trajectoire du tracteur. Il n'est pas nécessaire que le balancier se situe au-dessus des roues, ce qui permet également l'utilisation de roues avec un grand diamètre. De plus, les deux roues de chaque balancier sont rendues pivotantes au moyen d'un seul axe d'articulation sensiblement vertical. Par conséquent, les moyens à mettre en oeuvre pour rendre les roues pivotantes sont relativement simples.

Conformément à une caractéristique avantageuse de l'invention, chaque balancier est articulé au moyen de son axe sensiblement horizontal sur un bras incliné qui est lui-même articulé au moyen d'un axe sensiblement vertical sur un support lié à l'axe de rotation du rotor correspondant. Ledit axe sensiblement vertical se situe avantageusement sur une ligne passant par le milieu des zones d'appui au sol des deux roues d'un même balancier. Cet agencement est simple à réaliser. Il permet à l'ensemble constitué par les roues et le balancier de tourner facilement autour de l'axe sensiblement vertical.

Selon une autre caractéristique avantageuse de l'invention, le balancier est relié au bras muni d'un axe sensiblement vertical au moyen de deux leviers disposés de telle sorte que l'axe de pivotement sensiblement horizontal du balancier est un axe virtuel qui se situe près de la surface du sol. De ce fait, les roues peuvent à la fois mieux s'orienter suivant la trajectoire du tracteur et mieux suivre les dénivellations du sol.

D'autres caractéristiques et avantages de l'invention ressortiront des revendications et de la description ci-après d'exemples de réalisation non limitatifs de l'invention, avec référence aux dessins annexés dans lesquels :
- La figure 1 représente une vue de dessus simplifiée d'une machine selon l'invention,
- La figure 2 représente une vue de côté avec une coupe partielle de la machine de la figure 1,
- La figure 3 représente une vue de côté d'une autre machine selon l'invention,
- La figure 4 représente une vue de détail d'une variante de montage des roues selon l'invention,
- La figure 5 représente une vue de détail des roues selon un autre exemple de réalisation.

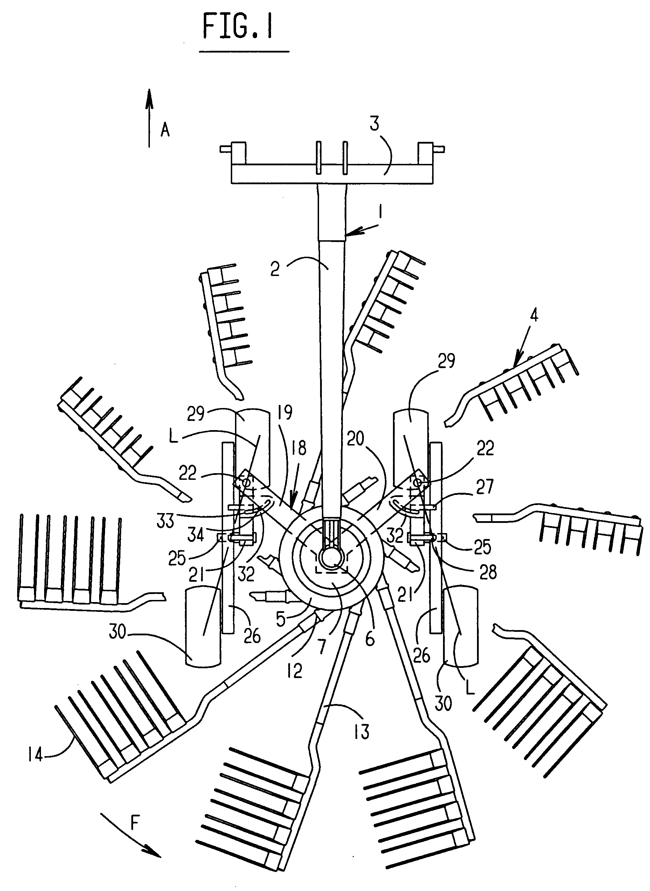

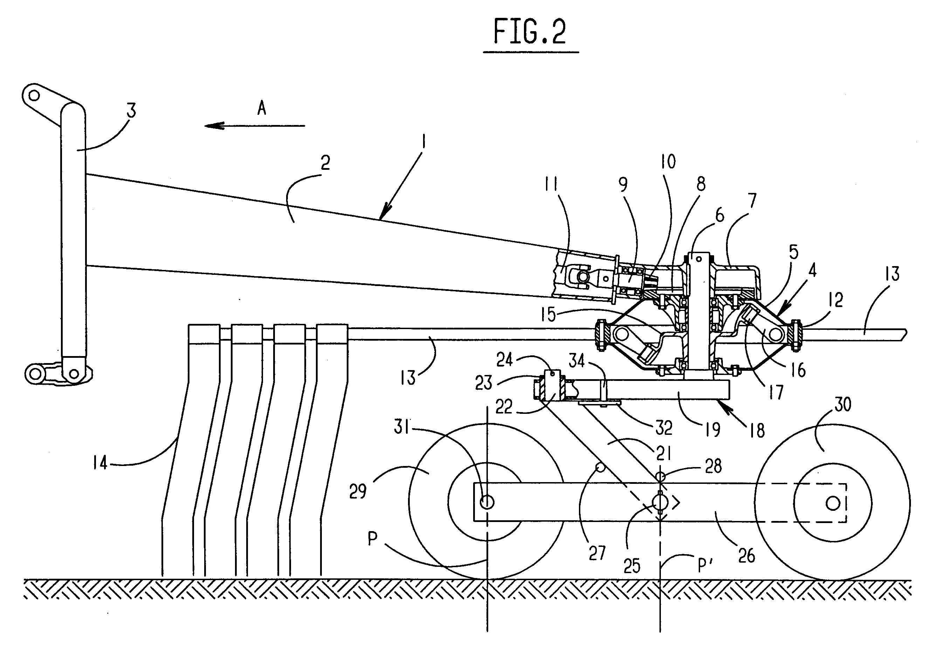

Telle qu'elle est représentée sur les figures 1 et 2, la machine selon l'invention comporte une structure porteuse (1). Celle-ci est constituée par une poutre (2) portant à son extrémité avant un dispositif d'accouplement trois points (3) pour l'accrochage à un tracteur d'entraînement non représenté. L'autre extrémité de la poutre (2) porte un rotor (4) destiné à déplacer des produits tels que de l'herbe coupée se trouvant sur le sol. Ledit rotor (4) possède un boîtier (5) monté de manière à pouvoir tourner sur un axe sensiblement vertical (6). Cet axe (6) est fixé à une calotte (7) qui est elle-même fixée à la poutre (2). A l'intérieur de cette calotte (7) est disposée une couronne dentée (8) qui est solidaire du boîtier (5). Dans la partie de la calotte (7) qui est dirigée vers la poutre (2) est logé un arbre de transmission (9) avec un pignon (10) qui engrène avec la couronne dentée (8). Cet arbre de transmission (9) peut être relié à l'arbre de prise de force du tracteur au moyen d'arbres intermédiaires (11), en vue de l'entraînement en rotation du boîtier (5) du rotor (4).

Le boîtier (5) est muni de paliers (12) à travers lesquels passent des bras (13). Ceux-ci s'étendent en forme de rayons et portent à leurs extrémités extérieures des outils de travail (14) constitués par des fourches. Ils sont logés dans lesdits paliers (12) de manière à pouvoir tourner sur eux-mêmes. Sur la partie de l'axe (6) qui se situe dans le boîtier (5) est montée une came fixe (15) destinée à commander les bras porte-outils (13) durant le travail. Pour cela chaque bras (13) possède à son extrémité qui s'étend à l'intérieur du boîtier (5) un levier (16) avec un galet (17) qui est guidé dans une gorge de la came (15).

L'extrémité inférieure de l'axe (6) se situe sous le boîtier (5). A cette extrémité est fixé un support (18) présentant deux branches (19, 20) dirigées obliquement vers l'avant. Sur chacune de ces branches (19, 20) est articulé un bras (21) au moyen d'un axe sensiblement vertical (22). Cet axe (22) est solidaire du bras (21) et est engagé de manière à pouvoir tourner sur lui-même dans un orifice de la branche (19 ou 20) correspondante. Il est arrêté axialement au moyen d'une rondelle (23) et d'une goupille (24). Chaque bras (21) est incliné vers le bas et vers l'arrière, de telle sorte qu'il forme un angle d'environ 45° avec son axe sensiblement vertical (22).

Chacun de ces bras (21) comporte à son extrémité inférieure un axe d'articulation sensiblement horizontal (25) sur lequel est monté un balancier (26). Ce balancier (26) peut tourner sur ledit axe (25) d'un angle limité par deux butées (27 et 28) qui sont solidaires du bras (21) correspondant. Chaque balancier (26) porte une paire de roues (29, 30) qui peuvent rouler sur le sol. La roue (29) la plus en avant de chaque paire se situe par rapport au balancier (26) correspondant, sur le côté dirigé vers l'axe de rotation (6) du rotor (4). L'autre roue (30) de chaque paire se situe sur le côté opposé dudit balancier (26). Ce décalage permet un meilleur suivi des dénivellations du sol.

L'axe sensiblement vertical (22) de chaque bras (21) se situe entre deux plans (P, P') verticaux et perpendiculaires à la direction d'avancement (A) et passant respectivement par l'axe (31) de la roue (29) la plus en avant et par l'axe sensiblement horizontal (25) dudit bras (21). En sus, vu de dessus (figure 1), cet axe sensiblement vertical (22) se situe sur une ligne (L) passant par le milieu des zones d'appui au sol des deux roues (29 et 30) qui sont montées sur le balancier (26) articulé sur le bras (21) correspondant. Il ressort de cette description que chaque bras (21) forme avec le balancier (26) qui est articulé sur son axe (25) et avec les deux roues (29 et 30) correspondantes un ensemble qui peut pivoter autour de son axe sensiblement vertical (22) en vue de s'orienter constamment dans la direction d'avancement (A).

Chaque bras (21) comporte une patte (32) avec un orifice (33) en forme d'arc de cercle dont le centre se situe sur l'axe (22). Chaque branche (19 ou 20) du support (18) comporte un arrêt cylindrique (34) dont l'extrémité se situe dans l'orifice (33). Cet arrêt (34) et les extrémités de l'orifice (33) limitent l'angle de pivotement des bras (21) autour des axes (22) afin d'éviter que les roues (29, 30) n'entrent dans la trajectoire des outils de travail (14). La machine selon l'invention pourrait aussi comporter deux rotors (4) tels que décrits ci-dessus, reliés à une structure porteuse commune. Dans ce cas, la largeur de travail serait pratiquement doublée.

Au travail, la machine selon les figures 1 et 2 est déplacée sur le sol dans la direction d'avancement (A), au moyen d'un tracteur. Le rotor (4) est alors entraîné en rotation dans le sens (F) autour de l'axe sensiblement vertical (6) à partir de l'arbre de prise de force du tracteur. Durant cette rotation, la came (15) commande les bras porte-outils (13), par l'intermédiaire des leviers (16) et des galets (17), de telle sorte que dans la partie avant de leur trajectoire, les outils (14) soient sensiblement verticaux et ramassent les produits se trouvant sur le sol. Ensuite, sur la partie latérale de leur trajectoire, les outils (14) se lèvent et déposent les produits ramassés sous la forme d'un andain. Enfin, sur la partie arrière de leur trajectoire, les outils (14) reviennent progressivement dans la position pour ramasser.

Durant le travail, les roues (29 et 30) roulent sur le sol et portent le rotor (4). Lorsqu'elles passent sur des dénivellations elles pivotent avec le balancier (26) correspondant autour de l'axe sensiblement horizontal (25). Les déplacements en hauteur des roues (29 et 30) ne sont que partiellement transmis au rotor (4). Celui-ci est alors beaucoup plus stable et peut avancer à plus grande vitesse. D'autre part, dans les courbes ou les virages de la trajectoire suivie par le tracteur et la machine, les roues (29 et 30) pivotent avec le balancier (26) et le bras (21) correspondants autour de l'axe sensiblement vertical (22) de ce dernier. Lesdites roues (29 et 30) s'orientent ainsi, sans ripage, dans la direction d'avancement (A).

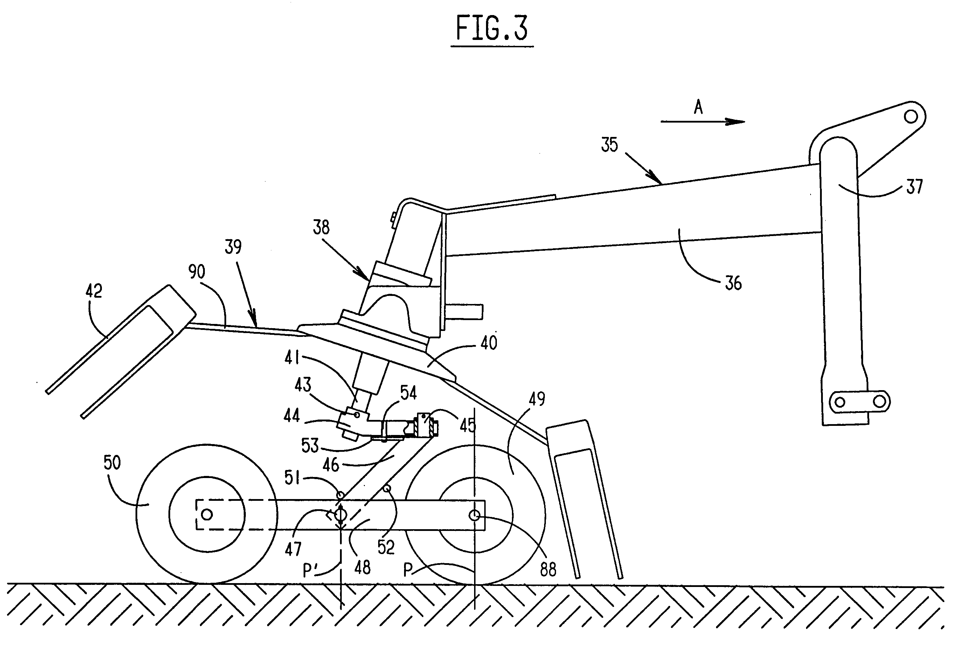

Dans l'exemple représenté sur la figure 3, la machine selon l'invention comporte une structure porteuse (35) constituée par une poutre (36) portant à son extrémité avant un dispositif d'accouplement (37) pour l'accrochage à un tracteur d'entraînement non représenté. L'autre extrémité de la poutre (36) porte un bâti transversal (38) avec plusieurs rotors (39) destinés à faner des produits tels que de l'herbe couchée sur le sol. Chacun de ces rotors (39) comporte un moyeu (40). Celui-ci est monté de manière à pouvoir tourner sur un axe (41) qui est proche d'une position verticale et qui est solidaire du bâti transversal (38). Audit moyeu (40) sont fixés plusieurs bras (90) qui s'étendent radialement et qui portent des outils de travail (42) tels que des fourches, à leurs extrémités. Dans le bâti transversal (38) sont logés des arbres d'entraînement qui sont munis de pignons. Ceux-ci engrènent avec des couronnes dentées solidaires des moyeux (40) des rotors (39) et assurent l'entraînement en rotation de ces rotors (39) durant le travail.

L'extrémité inférieure de l'axe (41) de chaque rotor (39) se situe sous le moyeu (40). A cette extrémité est fixé au moyen d'une goupille (43) un support sensiblement horizontal (44) qui est dirigé vers l'avant. Ce support (44) comporte un orifice dans lequel est logé un axe sensiblement vertical (45) d'un bras (46) incliné vers le bas et vers la direction opposée au sens d'avancement (A). Celui-ci comporte à son extrémité dirigée vers le bas un axe sensiblement horizontal (47) sur lequel est monté un balancier (48) équipé de deux roues (49 et 50) pouvant rouler sur le sol. L'une (49) de ces roues se situe devant l'axe sensiblement horizontal (47) tandis que l'autre (50) se situe derrière cet axe (47). Sur le bras (46) sont prévues deux butées (51, 52) pour limiter l'angle de pivotement du balancier (48) autour de l'axe (47).

L'axe sensiblement vertical (45) se situe entre deux plans (P et P') perpendiculaires à la direction d'avancement (A) et passant respectivement par l'axe (88) de la roue (49) la plus en avant et par l'axe (47) du balancier (48). Ledit axe sensiblement vertical (45) se situe en sus sur une ligne passant par le milieu des zones d'appui au sol des deux roues (49 et 50). Le bras (46) forme avec le balancier (48) et les deux roues (49 et 50) un ensemble qui peut pivoter autour de son axe sensiblement vertical (45) et qui s'oriente ainsi automatiquement dans la direction d'avancement (A). Le bras (46) comporte une patte (53) avec un orifice en forme d'arc de cercle dont le centre se situe sur l'axe (45). Le support (44) possède un arrêt cylindrique (54) dont l'extrémité s'engage dans ledit orifice de la patte (53). Cet arrêt (54) bloque le bras (46) lorsque l'une des extrémités de cet orifice arrive en contact avec lui. Il limite ainsi l'angle de pivotement du bras (46), du balancier (48) et des roues (49 et 50) autour de l'axe (45).

Au travail, la faneuse selon la figure 3 est déplacée sur le sol, dans la direction d'avancement (A), au moyen d'un tracteur. Les rotors (39) sont entraînés en rotation autour de leurs axes (41), de telle sorte qu'ils tournent deux à deux en convergence à l'avant. Leurs outils (42) ramassent alors l'herbe dans la partie avant de leur trajectoire et la projettent vers l'arrière. Elle est alors retournée et retombe sur le sol sous la forme d'une couche bien aérée.

Lorsque les roues (49 et 50) passent sur des dénivellations du sol, elles pivotent avec le balancier (48) autour de l'axe sensiblement horizontal (47) de celui-ci. Les déplacements en hauteur de ces roues (49 et 50) ne sont alors que partiellement transmis aux rotors (39). Par conséquent, ceux-ci sont plus stables et peuvent avancer à plus grande vitesse. D'autre part, dans les courbes et les virages, les roues (49 et 50) pivotent avec le balancier (48) et le bras (46) autour de l'axe sensiblement vertical (45) et s'orientent automatiquement dans la direction d'avancement.

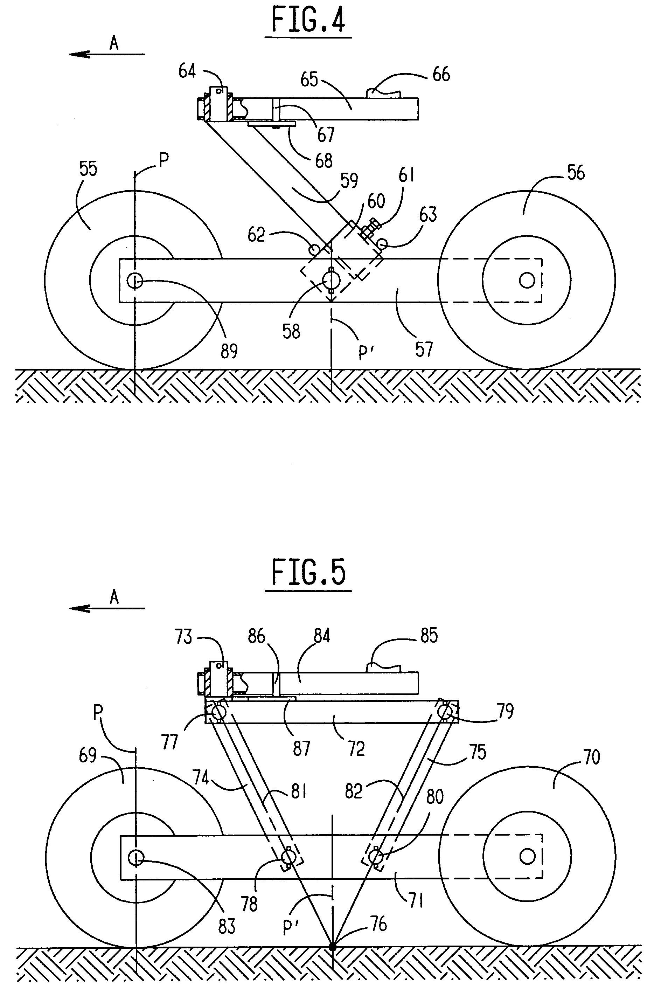

L'exemple de réalisation selon la figure 4 peut s'appliquer aux différentes machines décrites ci-avant. Dans cet exemple, les roues (55 et 56) sont montées sur un balancier (57) qui est articulé sur un axe sensiblement horizontal (58), dont la position par rapport au bras incliné (59) est réglable. Ledit axe (58) est solidaire d'un manchon (60) qui est déplaçable le long du bras (59). Ce manchon peut être arrêté dans différentes positions par une vis de pression (61). Il comporte en sus deux butées (62 et 63) qui s'étendent au-dessus du balancier (57) et qui limitent ses pivotements autour de l'axe (58).

Comme dans les exemples précédents, le bras (59) est articulé au moyen d'un axe sensiblement vertical (64) sur un support (65) qui est fixé sur l'axe de rotation (66) d'un rotor. Cet axe (64) se situe entre deux plans (P et P') passant respectivement par l'axe (89) de la roue (55) la plus en avant et par l'axe sensiblement horizontal (58). Les pivotements du bras (59) autour de l'axe (64) peuvent être limités au moyen d'un arrêt (67) engagé dans un orifice en forme d'arc de cercle prévu dans une patte (68) solidaire dudit bras (59).

Le fait de modifier la position de l'axe (58) du balancier (57) et des roues (55 et 56) permet d'ajuster la distance par rapport au sol des outils du rotor correspondant. Pour cela, il y a lieu de dévisser la vis (61) pour libérer le manchon (60). Celui-ci pourra alors être glissé le long du bras (59) de manière à déplacer l'axe (58) qui porte le balancier (57) avec les roues (55 et 56) vers le haut ou vers le bas. Dès que la position recherchée est atteinte, il y a lieu de serrer la vis (61), en vue du blocage du manchon (60).

L'exemple de réalisation selon la figure 5 peut également être utilisé sur toutes les machines décrites précédemment. Dans cet exemple, les deux roues (69 et 70) sont portées par un balancier (71) qui est relié à un bras (72) muni d'un axe de pivotement sensiblement vertical (73) au moyen de deux leviers (74 et 75). Ledit bras (72) est sensiblement horizontal. Les deux leviers (74 et 75) sont disposés de telle sorte que l'axe de pivotement sensiblement horizontal (76) du balancier (71) est un axe virtuel qui se situe près de la surface du sol sur lequel roulent les roues (69 et 70). Ces deux leviers (74 et 75) sont articulés sur le bras (72) et sur le balancier (71) au moyen d'axes (77 à 80) sensiblement horizontaux. En sus, ils sont dirigés obliquement vers le bas, à partir du bras (72), de telle sorte qu'en prolongeant leurs axes géométriques (81 et 82) ceux-ci se coupent près de la surface du sol. L'axe de pivotement virtuel (76) du balancier (71) se situe à l'intersection desdits axes géométriques (81 et 82). On voit également sur la figure 5 que l'axe sensiblement vertical (73) se situe entre deux plans (P et P') passant respectivement par l'axe (83) de la roue (69) la plus en avant et l'axe de pivotement virtuel (76). Cet axe (73) est articulé sur un support (84) qui est solidaire de l'axe de rotation (85) d'un rotor.

Dans ce mode de réalisation l'ensemble constitué par le bras (72), les leviers (74 et 75), le balancier (71) et les roues (69 et 70) pivote autour de l'axe sensiblement vertical (73) du bras (72) pour s'orienter automatiquement dans la direction d'avancement (A). Le bras (84) comporte un arrêt cylindrique (86) qui est engagé dans un orifice en forme d'arc de cercle d'une patte (87) solidaire du bras (72). Cet arrêt limite ainsi lesdits pivotements autour de l'axe sensiblement vertical (73). En sus, lorsque la roue (69) la plus en avant rencontre un obstacle, elle pivote avec le balancier (71) autour de l'axe virtuel (76) et se déplace vers le haut et légèrement vers l'arrière. Ces déplacements facilitent le franchissement de l'obstacle.

Il est bien évident que l'invention n'est pas limitée aux modes de réalisation tels que décrits ci-dessus et représentés sur les dessins annexés. Des modifications restent possibles, notamment en ce qui concerne la constitution des divers éléments ou par substitutions d'équivalents techniques, sans pour autant sortir du domaine de protection défini dans les revendications.

## Revendications

1. Machine de fenaison comportant notamment une structure porteuse pouvant être reliée à un tracteur, laquelle structure porte au moins un rotor tournant autour d'un axe sensiblement vertical qui est muni, à son extrémité dirigée vers le bas, d'une ou plusieurs paires de roues, chaque paire étant fixée sur un balancier pouvant tourner d'une manière limitée autour d'un axe sensiblement horizontal, caractérisée par le fait que chaque balancier (26, 48, 57, 71) est en sus articulé par rapport à l'axe de rotation (6, 41, 66, 85) du rotor (4, 39) correspondant au moyen d'un axe sensiblement vertical (22, 45, 64, 73) qui se situe entre deux plans (P et P') passant respectivement par l'axe (31, 88, 89, 83) de la roue (29, 49, 55, 69) la plus en avant et par ledit axe sensiblement horizontal (25, 47, 58, 76).

2. Machine selon la revendication 1, caractérisée par le fait que chaque balancier (26, 48, 57) est articulé au moyen de son axe sensiblement horizontal (25, 47, 58) sur un bras incliné (21, 46, 59) qui est lui-même articulé au moyen de l'axe sensiblement vertical (22, 45, 64) sur un support (18, 44, 65) lié à l'axe de rotation (6, 41, 66) du rotor (4, 39) correspondant.

3. Machine selon la revendication 1 ou 2, caractérisée par le fait que la position de l'axe d'articulation sensiblement horizontal (58) et du balancier (57) est réglable par rapport au bras incliné (59).

4. Machine selon la revendication 1, caractérisée par le fait que le balancier (71) est relié à un bras (72) muni de l'axe sensiblement vertical (73) au moyen de deux leviers (74 et 75) disposés de telle sorte que l'axe de pivotement sensiblement horizontal (76) du balancier (71) est un axe virtuel qui se situe près de la surface du sol.

5. Machine selon la revendication 4, caractérisée par le fait que le bras (72) muni de l'axe sensiblement vertical est sensiblement horizontal.

6. Machine selon la revendication 4 ou 5, caractérisée par le fait que les leviers (74 et 75) Sont articulés sur le bras (72) muni de l'axe sensiblement vertical et sur le balancier (71) au moyen d'axes (77 à 80) sensiblement horizontaux.

7. Machine selon la revendication 4 ou 6, caractérisée par le fait que les deux leviers (74 et 75) sont dirigés obliquement vers le bas, de telle sorte qu'en prolongeant leurs axes géométriques (81 et 82), ceux-ci se coupent près de la surface du sol.

8. Machine selon la revendication 2 ou 4, caractérisée par le fait que l'axe sensiblement vertical (22, 45, 64, 73) du bras (21, 46, 59, 72) se situe, vu de dessus, sensiblement sur une ligne (L) passant par le milieu des zones d'appui au sol des deux roues (29, 30, 49, 50, 55, 56, 69, 70) d'un même balancier (26, 48, 57, 71).

9. Machine selon la revendication 2, 4 ou 8, caractérisée par le fait que le support (18, 44, 65, 84) comporte un arrêt (34, 54, 67, 86) pour limiter le pivotement du bras (21, 46, 59, 72) autour de son axe sensiblement vertical (22, 45, 64, 73).

## Claims

1. Haymaking machine including especially a carrying structure which can be connected to a tractor, which structure carries at least one rotor rotating about a substantially vertical axis which is equipped, at its downwards-pointing end, with one or more pairs of wheels, each pair being fixed to a rocking beam which can rotate in limited way about a substantially horizontal axis, ***characterized in*** that each rocking beam (26, 48, 57, 71) is additionally articulated with respect to the axis of rotation (6, 41, 66, 85) of the corresponding rotor (4, 39) by means of a substantially vertical axis (22, 45, 64, 73) which is situated between two planes (P and P') passing respectively through the axis (31, 88, 89, 83) of the furthest-forward wheel (29, 49, 55, 69) and through the said substantially horizontal axis (25, 47, 58, 76).

2. Machine according to Claim 1, ***characterized in*** that each rocking beam (26, 48, 57) is articulated by means of its substantially horizontal axis (25, 47, 58) to an inclined arm (21, 46, 59) which is itself articulated by means of the substantially vertical axis (22, 45, 64) on a support (18, 44, 65) fastened to the axis of rotation (6, 41, 66) of the corresponding rotor (4, 39).

3. Machine according to Claim 1 or 2, ***characterized in*** that the position of the substantially horizontal articulation axis (58) and of the rocking beam (57) is adjustable with respect to the inclined arm (59).

4. Machine according to Claim 1, ***characterized in*** that the rocking beam (71) is connected to an arm (72) equipped with the substantially vertical axis (73) by means of two levers (74 and 75) which are arranged in such a way that the substantially horizontal axis of rotation (76) of the rocking beam (71) is an imaginary axis which is situated close to the surface of the ground.

5. Machine according to Claim 4, ***characterized in*** that the arm (72) equipped with the substantially vertical axis is substantially horizontal.

6. Machine according to Claim 4 or 5, ***characterized in*** that the levers (74 and 75) are articulated to the arm (72) equipped with the substantially vertical axis and to the rocking beam (71) by means of substantially horizontal axes (77 to 80).

7. Machine according to Claim 4 or 6, ***characterized in*** that the two levers (74 and 75) point obliquely downwards in such a way that, if their geometric axes (81 and 82) are extended, these intersect close to the surface of the ground.

8. Machine according to Claim 2 or 4, ***characterized in*** that the substantially vertical axis (22, 45, 64, 73) of the arm (21, 46, 59, 72) is situated, viewed from above, substantially on a line (L) passing through the middle of the areas where the two wheels (29, 30, 49, 50, 55, 56, 69, 70) of the same rocking beam (26, 48, 57, 71) rest on the ground.

9. Machine according to Claim 2, 4 or 8, ***characterized in*** that the support (18, 44, 65, 84) includes a stop (34, 54, 67, 86) to limit the pivoting of the arm (21, 46, 59, 72) about its substantially vertical axis (22, 45, 64, 73).

## Patentansprüche

1. Heuwerbungsmaschine mit insbesondere einer Tragkonstruktion, die mit einem Traktor verbunden werden kann, wobei die Konstruktion mindestens einen sich um eine im wesentlichen vertikale Achse drehenden Rotor trägt, die an ihrem nach unten gerichteten Ende mit einem oder mehreren Paaren von Rädern versehen ist, wobei jedes Paar an einer Schwinge befestigt ist, die sich auf begrenzte Weise um eine im wesentlichen horizontale Achse drehen kann, ***dadurch gekennzeichnet,*** daß jede Schwinge (26, 48, 57, 71) darüber hinaus mittels einer im wesentlichen vertikalen Achse (22, 45, 64, 73), die sich zwischen zwei die Achse (31, 88, 89, 83) des am weitesten vorne liegenden Rades (29, 49, 55, 69) bzw. die im wesentlichen horizontale Achse (25, 47, 58, 76) durchquerenden Ebenen (P und P') befindet, bezüglich der Drehachse (6, 41, 66, 85) des entsprechenden Rotors (4, 39), schwenkbar ist.

2. Maschine nach Anspruch 1, ***dadurch gekennzeichnet,*** daß jede Schwinge (26, 48, 57) mittels seiner im wesentlichen horizontalen Achse (25, 47, 58) an einem geneigten Arm (21, 46, 59) angelenkt ist, der seinerseits mittels der im wesentlichen vertikalen Achse (22, 45, 64) an einer mit der Drehachse (6, 41, 66) des entsprechenden Rotors (4, 39) verbundenen Stutze (18, 44, 65) angelenkt ist.

3. Maschine nach Anspruch 1 oder 2, ***dadurch gekennzeichnet,*** daß die Position der im wesentlichen horizontalen Gelenkachse (58) und der Schwinge (57) bezüglich des geneigten Arms (59) einstellbar ist.

4. Maschine nach Anspruch 1, ***dadurch gekennzeichnet,*** daß die Schwinge (71) mittels zweier derart angeordneter Hebel (74 und 75), daß die im wesentlichen horizontale Schwenkachse (76) der Schwinge (71) eine gedachte Achse ist, die sich nahe der Bodenfläche befindet, mit einem mit der im wesentlichen vertikalen Achse (73) versehenen Arm (72) verbunden ist.

5. Maschine nach Anspruch 4, ***dadurch gekennzeichnet,*** daß der mit der im wesentlichen vertikalen Achse versehene Arm (72) im wesentlichen horizontal ist.

6. Maschine nach Anspruch 4 oder 5, ***dadurch gekennzeichnet,*** daß die Hebel (74 und 75) mittels im wesentlichen horizontaler Achsen (77 bis 80) an dem mit der im wesentlichen vertikalen Achse versehenen Arm (72) und an der Schwinge (71) angelenkt sind.

7. Maschine nach Anspruch 4 oder 6, ***dadurch gekennzeichnet,*** daß die beiden Hebel (74 und 75) derart schräg nach unten gerichtet sind, daß bei Verlängerung ihrer geometrischen Achsen (81 und 82) diese sich nahe der Bodenfläche schneiden.

8. Maschine nach Anspruch 2 oder 4, ***dadurch gekennzeichnet,*** daß sich die im wesentlichen vertikale Achse (22, 45, 64, 73) des Arms (21, 46, 59, 72) von oben gesehen im wesentlichen auf einer die Mitte der Auflagezonen auf dem Boden der beiden Räder (29, 30, 49, 50, 55, 56, 69, 70) einer gleichen Schwinge (26, 48, 57, 71) durchlaufenden Linie (L) befindet.

9. Maschine nach Anspruch 2, 4 oder 8, ***dadurch gekennzeichnet,*** daß die Stütze (18, 44, 65, 84) ein Halteglied (34, 54, 67, 86) zum Begrenzen des Schwenkens des Arms (21, 46, 59, 72) um seine im wesentlichen vertikale Achse (22, 45, 64, 73) aufweist.
